# EUROPÄISCHE PATENTSCHRIFT

(11) **EP 1 342 625 B1**
(45) Veröffentlichungstag und Bekanntmachung des Hinweises auf die Patenterteilung: **18.05.2005**
(21) Anmeldenummer: 03405064.1
(22) Anmeldetag: 06.02.2003
(51) Int. Cl.: B60R 19/24

(54) **Stossstange mit Halterungen**
Bumper with mounting means
Pare-chocs avec elements support

(30) Priorität: 06.03.2002 DE 10209721
(43) Veröffentlichungstag der Anmeldung: 10.09.2003
(73) Patentinhaber: Alcan Technology & Management Ltd., 8212 Neuhausen am Rheinfall (CH)
(72) Erfinder: Frank, Simon, 78250 Tengen (DE)

(56) Entgegenhaltungen:
- EP-A- 0 110 631
- EP-A- 0 908 356
- DE-A- 19 831 708

## Beschreibung

Die Erfindung betrifft eine Stoßstange mit einem Hohlprofil nach dem Oberbegriff des Anspruchs 1.

Eine Stoßstange dieser Art mit die Längsachse ihres Längsträgers querenden plattenartigen Halterungen beschreibt die EP 0 718 158 B1 unter Hinweis darauf, dass neben der Querschnittsform der Stoßstange auch die Ausgestaltung der Verbindung zum Fahrzeuglängsträger deren Formhaltigkeit beeinflusst sowie deren Kompensationsvermögen für die auftreffende Verformungsenergie.

Zum Befestigen der Stoßstange am Fahrzeug sind eine Vielzahl von Halterungen bekannt -- beispielsweise aus US-A-5,080,410 oder US-A-4,563,028 --, die jedoch kaum zur Verbesserung der Formhaltigkeit einer Stoßstange bei einem Aufprall beitragen.

Die EP 0 908 356 A1 beschreibt eine gattungsgemäße Stossstange mit einer an dieser angebrachten Halterung zum Anschluss an einen Längsträger, wobei die Halterung zur Stossstange hin abgebogen ist.

Angesichts dieser Gegebenheiten hat sich der Erfinder das Ziel gesetzt, eine Stoßstange mit an dieser festgelegten Halterungen der eingangs erwähnten Art zu schaffen, die bei geringem Gewicht ein hohes Maß an Formhaltigkeit bei ausreichendem Kompensationsvermögen für die auftreffende Verformungsenergie aufweist. Zudem sollen Herstellung und Handhabung der Stoßstange sowie der Halterung sehr einfach und die Länqsträqerkräfte niedriger sowie zentral sein.

Zur Lösung dieser Aufgabe führt die Lehre des unabhängigen Patentanspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß ist die Halterung als Hohlprofil ausgebildet, und dieses weist einen dem Längsträger zugeordneten Hohlprofilträgerabschnitt sowie einen aus dessen Längsachse gebogenen Krümmungsabschnitt zum Anschluss an das Hohlprofil der Stoßstange auf. Dazu hat es sich als günstig erwiesen, dass das Hohlprofil der Halterung zwei durch Querwände verbundene Seitenwände anbietet sowie eine der Seitenwände im Bereich des Krümmungsabschnitts an die andere Seitenwand unter Bildung eines rinnenartigen Querschnitts herangeführt ist; letzterer ist doppellagig, da er sich bevorzugt aus den aufeinanderliegenden Seitenwänden sowie den jeweils etwa mittig gefalteten Querwänden zusammensetzt.

Dank dieser Ausgestaltung der Halterung entsteht eine die vorgegebene Aufgabe in bestechender Weise lösende Verbindung zwischen dem leicht gekrümmten Hohlprofil der Stoßstange und den Längsträgern des Fahrzeuges. In diesem Zusammenhang sei darauf verwiesen, dass die erfindungsgemäßen Halterungen eine Stoßstange auch dann in günstiger Weise an die Längsträger anzuschließen vermögen, wenn jene von einem anderen Profilelement als einem Hohlprofil gebildet wird.

Nach einem anderen Merkmal der Erfindung schmiegen sich die aneinanderliegenden Seitenwände des Krümmungsabschnittes in Einbaulage der Halterung an die benachbarte Profilwand der Stoßstange, wobei die gefalteten Querwände des Krümmungsabschnittes, welche die Schenkel des Rinnenabschnittes darstellen, die Flankenwände des Hohlprofils -- oder eines entsprechenden Organs -- der Stoßstange teilweise übergreifen.

Die gefalteten Querwände bzw. die Schenkel des rinnenförmigen Querschnitts des Krümmungsabschnitts werden erfindungsgemäß mit den zwischen ihnen liegenden Flankenwänden des Hohlprofils der Stoßstange verbunden, die Querwände des Hohlprofilträgerabschnitts mit dem fahrzeugseitigen Längsträger. Dazu hat sich eine lösbare Verbindung -- beispielsweise eine Schraubverbindung, zwischen der Halterung einerseits und dem Hohlprofil der Stoßstange bzw. dem fahrzeugseitigen Längsträger andererseits -- für Montage und Austausch als besonders vorteilhaft erwiesen.

Durch die erfindungsgemäße Anbindung der Stoßstange bzw. des Hohlprofils an die Fahrzeuglängsträger werden -- neben einer Kostensenkung -- u.a. die nachstehenden Vorteile erreicht:
(a) geringes Gewicht (2 bis 3 kg);
(b) duktiles Verhalten;
(c) geringe Eindringtiefe beim AZT (Abbau der Energie in der Vorkammer);
(d) Al-Legierung ohne Kupfer und Zink;
(e) Abbau der Energie im Profil;
(f) geringere bzw. zentrale Längsträgerkräfte mit der Folge eines leichteren Vorbaus.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: die Draufsicht auf eine Stoßstange mit -- an beiden Enden der Stoßstange unterschiedlich ausgebildeten -- Halterungen zum Anschluss an einen Längsträger;
- Fig. 2:: eine Schrägsicht auf einen Teil einer Stoßstange mit erfindungsgemäßer Halterung;
- Fig. 3:: eine Stirnansicht der Stoßstange nach Fig. 2;
- Fig. 4:: eine teilweise geschnittene Draufsicht auf einen Fußhalter als Halterung für die Stoßstange der Fig. 2;
- Fig. 5:: eine Schrägsicht auf einen Abschnitt des Fußhalters;
- Fig. 6:: ein Kraft/Weg-Diagramm zu Belastungsversuchen mit angedeuteter Energiekurve.

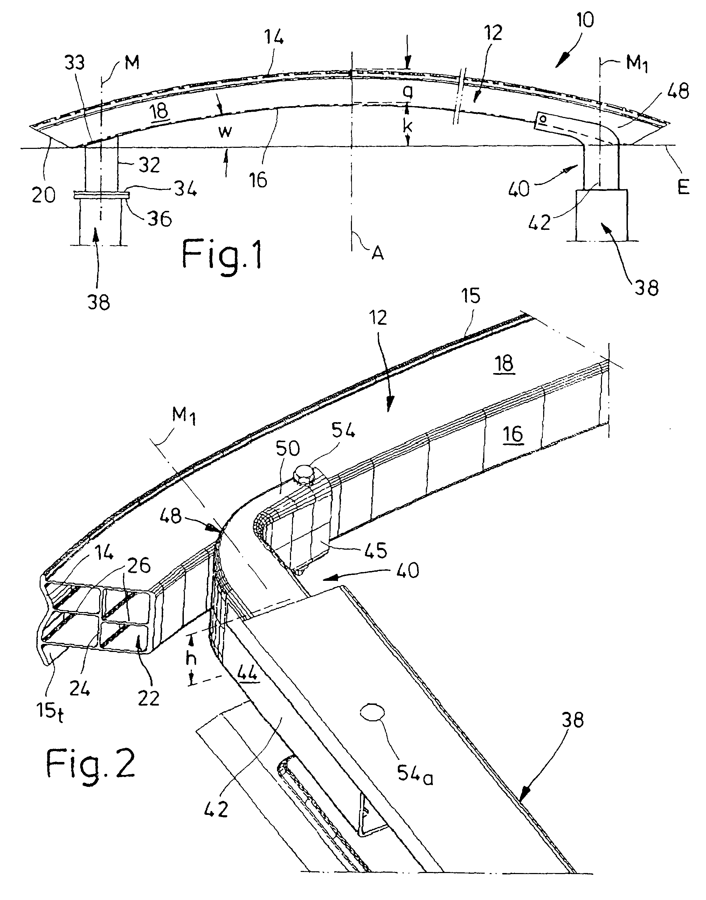

Eine aus einer Aluminiumlegierung stranggepresste Stoßstange 10 eines aus Gründen der Übersichtlichtkeit nicht wiedergegebenen Personenkraftwagens weist gemäß Fig. 1 zwei in Abstand a zueinander verlaufende Profilwände 14, 16 auf, die durch Flankenwände 18 zu einem kastenförmigen Hohlprofil 12 ergänzt sind. Letzteres ist einer zur Fahrzeuglängsachse A im rechten Winkel verlaufenden Querebene E zugeordnet sowie beidseits der hier eine Symmetrieebene bildenden Fahrzeuglängsachse A zu jener Querebene B hin gleichmäßig gekrümmt; das Hohlprofil 12 bestimmt zu dieser hin in Längsachse A ein Krümmungsmaß k. In Einbaulage bildet die von der Querebene E weg weisende Profilwand 14 einen --Stoßkräfte aufnehmenden -- Außen- oder Druckgurt, die andere Profilwand 14 einen Innen- oder Zuggurt.

Nahe den Stirnkanten 20 des Hohlprofils 12 sind in Fig. 1 Deformationsorgane 30 aus einem Profilstück 32 sowie einem an diesem einends festliegenden, die Mittellinie M des Profilstücks 32 querenden Befestigungsflansch 34 vorgesehen. Die Deformationsorgane 30 sind zum einen an der inneren Profilwand 14 angebracht sowie andernends mit jenem Befestigungsflansch 34 jeweils an einen Gegenflansch 36 eines Fahrzeuglängsträgers 38 angeschweisst. Das Profilstück 32 ist ebenfalls aus einem stranggepressten Profil gefertigt, und auch der Befestigungsflansch 32 besteht aus Aluminiumwerkstoff. Zudem ist das Profilstück 32 an dem der Stoßstange 10 zugewandten Ende angeschrägt, und diese Schrägkante 33 bestimmt mit der Querebene E einen Winkel w von beispielsweise 10°.

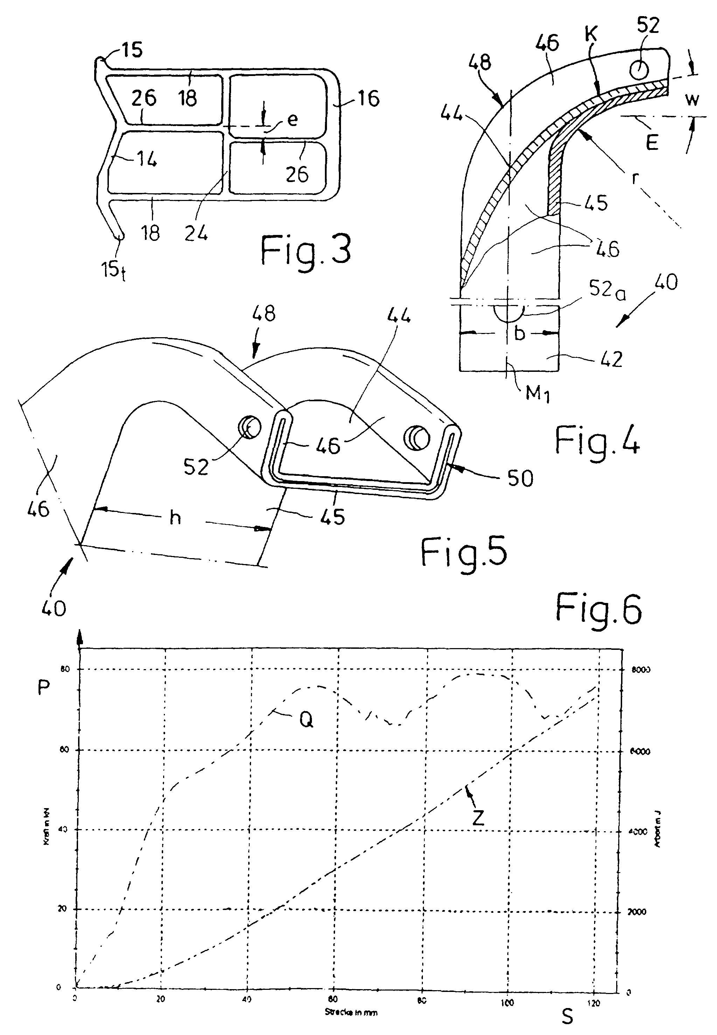

Der erfindungsgemäße Anschluss des Hohlprofils 12 an den Fahrzeug-Längsträger 38 ist den Fig. 2 bis 4 zu entnehmen. Deutlich wird in Fig. 2, 3 auch, dass die als Außengurt dienende -- in sich wellenartig gekrümmte -- Profilwand 14 beide Flankenwände 18 mit flügelartigen Wandabschnitten 15, 15ₜ übergreift, und dass einstückig mit den Profilwänden 14, 16 sowie den diese verbindenden Flankenwänden 18 im Profilinnenraum 22 eine Querwand 24 mit jeweils einer zwischen dieser und den Profilwänden 14, 16 verlaufenden Mittelwand 26 vorgesehen sind. Diese Mittelwände 26 sind zueinander um ein Maß e seitenversetzt.

Der Anschluss des Hohlprofils 12 an den Längsträger 38 wird hier durch einen aus einem -- seinerseits aus einer Aluminiumlegierung stranggepreßten -- Hohlprofil der Breite b von beispielsweise 55 mm sowie der Höhe h von 75 mm geformten Fußhalter 40 als Halterung hergestellt.

An einen gesondert gefertigen -- dem Fahrzeuglängsträger 38 zugeordneten und in diesem verschraubten -- Hohlprofilträgerabschnitt 42 etwa rechteckigen Querschnitts aus zwei parallelen Seitenwänden 44, 45 und diese verbindenden Querwänden 46 des Hohlprofils der Halterung 40 schließt ein Krümmungsabschnitt 48 an; die in Fig. 2, 4 rechte Seitenwand 45 ist in einem Radius r nach außen -- also hier aus der Längsachse M₁ des Hohlprofilträgerabschnittes 42 nach rechts -- gekrümmt und die andere Seitenwand 44 endwärts an diese so herangeführt, dass beide Seitenwände 44, 45 aufeinanderliegen und jeder der beiden Querwände 46 etwa in ihrer Mitte gefaltet ist. Dabei verläuft die innere Krümmungskontur K entsprechend der Außenfläche der inneren Profilwand 16 des Hohlprofils 12, d.h. sie schließt mit einer Parallelen E₁ zur Querebene E den erwähnten Winkel w ein.

Die doppellagigen Schenkel 50 des so entstandenen rinnenartigen Krümmungsabschnitts 48 werden im Bereich von Durchbrüchen 52 von Schrauben 54 od.dgl. Verbindungsorganen durchsetzt, welche zudem in die Stoßstange 10 bzw. das Hohlprofil 12 eingreifen. Entsprechende Durchbrüche 52ₐ für Verbindungsorgane 54ₐ sind am anderen Ende des Hohlprofilträgerabschnittes 42 vorgesehen.

Das Kraft/Weg-Diagramm nach Fig. 6 zeigt die Abhängigkeit der Druckkraft P (kN) vom Durchbiegungsweg S (mm) als Ergebnis eines an einer erfindungsgemäßen Stoßstangenanordnung durchgeführten Belastungstests. Der im Anfangsbereich verhältnismäßig steile Verlauf der Kurve Q weist auf das ausgezeichnete Kompensationsvermögen für die auftretende Verformungsenergie hin. Am rechten Rand des Diagramms ist die Arbeit in Joule aufgetragen für den Verlauf einer mit Z bezeichneten Energiekurve.

## Patentansprüche

1. Stossstange mit einem Hohlprofil (12) sowie an diesem angebrachten Halterungen (40) zum Befestigen der Stossstange (10) an einem Fahrzeug -- insbesondere an Längsträgern (38) eines Personenkraftwagens --, wobei in Abstand zueinander als Druckgurt bzw. Zuggurt angeordnete Profilwände (14, 16) sowie ein Paar diese verbindender Flankenwände (18) das Hohlprofil (12) bilden und letzteres gegebenenfalls zumindest im Bereich der Halterungen (40) gegenüber einer Querebene (E) der Längsachse (A) des Fahrzeuges gewölbt ausgebildet ist, und die Halterung (40) ein Hohlprotil ist sowie dieses einen dem Längsträger (38) zugeordneten Hohlprofilträgerabschnitt (42) und einen aus dessen Längsachse (M₁) gebogenen Krümmungsabschnitt (48) zum Anschluss an das Hohlprofil (12) der Stossstange (10) aufweist,
**dadurch gekennzeichnet, dass**
das Hohlprofil der Halterung (40) zwei durch Querwände (46) verbundene Seitenwände (44, 45) aufweist, und eine der Seitenwände (44) im Bereich des Krümmungsabschnitts (48) an die andere Seitenwand (45) unter Bildung eines rinnenartigen Querschnitts herangeführt ist.

2. Stoßstange nach Anspruch 1, **dadurch gekennzeichnet, dass** sich der rinnenartige Querschnitt der Halterung (40) aus den aufeinanderliegenden Seitenwänden (44, 45) sowie den jeweils etwa mittig gefalteten Querwänden (46) zusammensetzt, welch letztere die Schenkel (50) des rinnenartigen Querschnitts bilden.

3. Stoßstange nach Anspruch 1 oder 2, **dadurch gekennzeichnet, dass** sich die aneinanderliegenden Seitenwände (44, 45) des Krümmungsabschnittes (48) in Einbaulage an die benachbarte Profilwand (16) der Stoßstange (10) anschmiegen sowie dessen gefaltete Querwände (46) die Flankenwände (18) des Hohlprofils (12) der Stoßstange (10) teilweise übergreifen.

4. Stoßstange nach einem der Ansprüche 1 bis 3, **dadurch gekennzeichnet, dass** die gefalteten Querwände (46) bzw. die Schenkel (50) des rinnenförmigen Querschnitts des Krümmungsabschnitts (48) mit den zwischen ihnen liegenden Flankenwänden (18) des Hohlprofils (12) der Stoßstange (10) verbunden sind.

5. Stoßstange nach einem der Ansprüche 1 bis 4, **dadurch gekennzeichnet, dass** die Querwände (46) des Hohlprofilträgerabschnitts (42) mit dem fahrzeugseitigen Längsträger (38) verbunden sind.

6. Stoßstange nach Anspruch 4 oder 5, **gekennzeichnet durch** eine lösbare Verbindung, beispielsweise eine Schraubverbindung, zwischen der Halterung (40) einerseits und dem Hohlprofil (12) der Stoßstange (10) bzw. dem fahrzeugseitigen Längsträger (38) andererseits.

7. Stoßstange nach einem der Ansprüche 1 bis 6, **dadurch gekennzeichnet, dass** das Hohlprofil der Halterung (40) und/oder das Hohlprofil (12) der Stoßstange (10) aus einer Cu-freien und/oder einer Zn-freien Aluminiumlegierung stranggepresst sind/ist.

## Claims

1. Bumper having a hollow section (12) and attached to it a mounting bracket (40) for attaching the bumper (10) to a vehicle - in particular on longitudinal beams (38) of a private car - whereby section walls (14, 16) that are spaced apart form a compression strut and a tensile strut and a pair of flanking walls (18) joining the said struts make up the hollow section (12) and the latter, if desired, is domed at least in the region of the mounting bracket (40) with respect to a transverse plane (E) of the longitudinal axis (A) of the vehicle, and the mounting bracket (40) is a hollow section and this exhiibits a length (42) facing the longitudinal beam (38) and a curved length (48) which is bent away from the longitudinal axis (M₁) for connection to the hollow section (12) of the bumper (10)
**characterised in that**,
the hollow section of the bracket (40) exhibits two side walls (44, 45) that are joined by transverse walls (46), and in the region of the curved length (48) one of the side walls (44) is brought up against the other side wall (45) forming a channel shaped cross-section.

2. Bumper according to claim 1, **characterised in that** the channel-shaped cross-section of the bracket (40) is made up of the overlying side walls (44, 45) and the transverse walls (46) which are folded in approximately the middle, the latter forming the flanges (50) of the channel-shaped cross-section.

3. Bumper according to claim 1 or 2, **characterised in that**, when installed, the overlying side walls (44, 45) of the curved length (48) lie flush against the neighbouring section wall (16) of the bumper (10) and its folded transverse walls (46) extend partially over the flanking walls (18) of the hollow section (12) of the bumper (10).

4. Bumper according to one of the claims 1 to 3, **characterised in that** the folded transverse walls (46) or the flanges (50) of the channel-shaped length of the curves section length (48) are connected to flanking walls (18) of the hollow section (12) of the bumper (10) lying between them.

5. Bumper according to one of the claims 1 to 4, **characterised in that** the transverse walls (46) of the length of hollow-section beam (42) are connected to the longitudinal beam (38) of the vehicle.

6. Bumper according to one of the claims 4 or 5, **characterised by** way of a releasable connection, for example a bolted connection, between the bracket (40) and the hollow section (12) of the bumper (10) or the longitudinal beam (38) of the vehicle.

7. Bumper according to one of the claims 1 to 6, **characterised in that** the hollow beam of the bracket (40) and/or the hollow section (12) of the bumper (10) are/is of an extruded Cu-free and/or Zn-free aluminium alloy.

## Revendications

1. Pare-chocs avec un profilé creux (12) ainsi que des attaches (40) montées sur celui-ci pour la fixation du pare-chocs (10) sur un véhicule - en particulier sur les longerons (38) d'une voiture particulière -, moyennant quoi des parois de profilé (14, 16) agencées à distance les unes des autres comme membrure comprimée ou membrure tendue ainsi qu'une paire de parois de flanc (18) reliant celles-ci forment le profilé creux (12) et ce dernier est bombé par rapport à un plan transversal (E) de l'axe longitudinal (A) du véhicule au moins dans la zone des attaches (40), et l'attache (40) est un profilé creux et celui-ci comporte un segment porteur de profilé creux (42) associé au longeron (38) et un segment de courbure (48) cintré à partir de l'axe longitudinal de celui-ci (M₁) pour le raccordement au profilé creux (12) du pare-chocs (10),
**caractérisé en ce que**
le profilé creux de l'attache (40) comporte deux parois latérales (44, 45) reliées par des parois transversales (46) et **en ce que** l'une des parois latérales (44) est rapprochée de l'autre paroi latérale (45) dans la zone du segment de courbure (48) en formant une section transversale en forme de gouttière.

2. Pare-chocs selon la revendication 1, **caractérisé en ce que** la section transversale en forme de gouttière de l'attache (40) est constituée des parois latérales placées l'une sur l'autre (44, 45) ainsi que des parois transversales (46) pliées chacune à peu près au centre, ces dernières formant les montants (50) de la section transversale en forme de gouttière.

3. Pare-chocs selon la revendication 1 ou 2, **caractérisé en ce que** les parois latérales placées l'une à côté l'autre (44, 45) du segment de courbure (48) épousent la forme de la paroi de profilé (16) du pare-chocs (10) adjacente dans la position de montage et les parois transversales pliées de celui-ci (46) empiètent partiellement sur les parois de flanc (18) du profilé creux (12) du pare-chocs (10).

4. Pare-chocs selon l'une quelconque des revendications 1 à 3, **caractérisé en ce que** les parois transversales pliées (46) ou les montants (50) de la section transversale en forme de gouttière du segment de courbure (48) sont raccordées aux parois de flanc (18) du profilé creux (12) du pare-chocs (10) se trouvant entre celles-ci.

5. Pare-chocs selon l'une quelconque des revendications 1 à 4, **caractérisé en ce que** les parois transversales (46) du segment porteur de profilé creux (42) sont raccordées au longeron (38) du côté du véhicule.

6. Pare-chocs selon la revendication 4 ou 5, **caractérisé par** un raccord détachable, par exemple un raccord vissé, entre l'attache (40), d'une part, et le profilé creux (12) du pare-chocs (10) ou le longeron (38) du côté du véhicule, d'autre part.

7. Pare-chocs selon l'une quelconque des revendications 1 à 6, **caractérisé en ce que** le profilé creux de l'attache (40) et/ou le profilé creux (12) du pare-chocs (10) sont extrudés/est extrudé dans un alliage d'aluminium sans Cu et/ou sans Zn.
